# EUROPEAN PATENT APPLICATION

(11) **EP 2 755 125 A2**
(43) Date of publication of application: **16.07.2014**
(21) Application number: 14150472.0
(22) Date of filing: 08.01.2014
(51) Int. Cl.: G06F 3/0488, G06F 3/045, G06F 3/039

(54) **Game controller for resistive touch screen**

(30) Priority: 14.01.2013 CN 201320018404 U
(71) Applicant: Boe Optical Science And Technology Co., Ltd., Suzhou, Jiangsu 215021 (CN); BOE Technology Group Co., Ltd., Beijing 100015 (CN)
(72) Inventor: Ying, Wentao, 100176 Beijing (CN)
(74) Representative: Klunker . Schmitt-Nilson . Hirsch

(57) **Abstract**

The embodiment of present invention relates to a game controller for a resistive touch screen, the controller comprising one or more direction control key and one or more function button, the undersurfaces of which are provided with pressing touch pins; and the direction control key and the function button are securely attached to the resistive touch screen when the game controller is in use.

## Description

### TECHNICAL FIELD

The embodiment of present invention relates to a game controller for a resistive touch screen.

### BACKGROUND

Presently, in the digital product terminals with touch screen, a control mode of which adopts a built-in simulator, and then the user touches corresponding positions on the touch screen so as to control directions of movement and actuate a certain actions. Although this arrangement is convenient for a user to operate and do not need any peripheral equipment, the user often touch areas beyond the designation area because the touch screen is entirely a flat surface, such that incorrect operations would occur.

### SUMMARY

An embodiment of the present invention provides a game controller for eliminating incorrect operations of direction controls and touch positions of the touch screen.

An embodiment of the present invention provides a game controller for a resistive touch screen, comprising one or more direction control key and one or more function buttons, the back surfaces of which are provided with pressing touch pins; and the direction control keys and the function buttons are securely attached to the resistive touch screen when the game controller is in use.

For example, in another embodiment of the present invention, the direction control keys and the function buttons are arranged in a detachable configuration.

For example, in another embodiment of the present invention, the direction control keys and the function buttons are arranged in an integral configuration.

For example, in another embodiment of the present invention, the direction control key is in a cross shape, and each end portion of the direction control key is provided with a pressing touch pin.

For example, in another embodiment of the present invention, the back surfaces of the direction control keys and the function buttons are provided with suction cups for attaching the direction control keys and the function buttons onto the resistive touch screen, and each pressing touch pin is provided at a central position of each suction cup.

For example, in another embodiment of the present invention, the suction cups are made of resilient material.

For example, in another embodiment of the present invention, the direction control keys and the function buttons are adhesively attached to the resistive touch screen.

The present invention provides the following advantages compared with the prior art and existing products: the game controller according to the present invention may eliminate incorrect operation of the direction controls and the touch positions of the touch screen, such that users could achieve even better experience when playing the game; and further, the game controller of the present invention facilitates the operation, reduces the cost, and has a promising market prospect.

### BRIEF DESCRIPTION OF THE DRAWINGS

In order to illustrate the technical solution of the embodiment of present invention more clearly, a simply introduction about the drawings of the embodiments will be made in the following, and obviously, the drawings described later relate to only some embodiments of the present invention, rather than limitation to the present invention.

Fig.1 is a top view of a game controller in a detachable configuration according to an embodiment of the present invention;

Fig.2 is a bottom schematic view of a game controller in a detachable configuration according to an embodiment of the present invention;

Fig.3 is a schematic view of a game controller in an integral configuration according to another embodiment of the present invention.

### DETAILED DESCRIPTION

For better understanding of the technical solution of the present invention, the present invention will be further described in details in connection with the drawings and the specific embodiments.

Unless otherwise defined, all the technical and scientific terms used herein have the common meanings as understood by one of ordinary skill in the art to which the present invention belongs. The terms "first" "second" etc., which may be used in the description and the claims of the present invention, are not intended to indicate any sequence, number or importance, but merely to distinguish various components from one another. Also, the terms such as "a" "an" etc., are not intended to limit the number, but indicate the existence of at least one. The terms "comprise" "comprising" "include," "including" etc., are intended to specify that the elements or the objects stated before these terms encompass the elements or the objects and equivalents thereof listed after these terms, but do not exclude other elements or objects. The phrases "connect", "connected", etc., are not intended to be limited to a physical connection or mechanical connection, but may include an electrical connection, directly or indirectly. "Up" "under" "right" "left" and the like are only used to indicate relative position relationship, and when the position of the described object is changed, the relative position relationship may be changed accordingly.

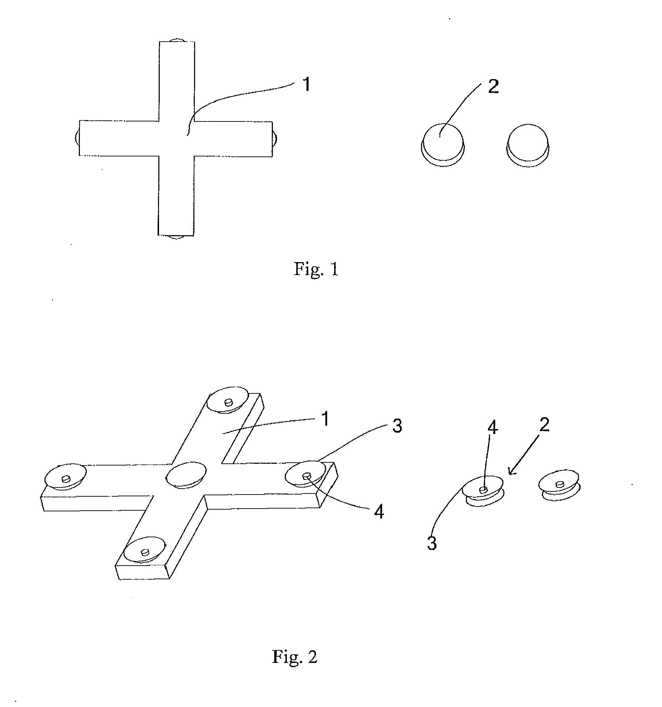

The embodiment provides a game controller for a resistive touch screen, as shown in Figs.1 and 2, the game controller comprises direction control keys 1 and function buttons 2, the undersurfaces of which are provided with pressing touch pins 4. When the game controller is in use, the direction control keys 1 and the function buttons 2 may be sucked or adhesively attached to the resistive touch screen securely. By pressing corresponding buttons and/or keys of the game controller, the pressing touch pins 4 provided at the back surface of the buttons and/or keys touch corresponding areas of the resistive touch screen, so as to achieve positioning control at corresponding positions of the touch screen.

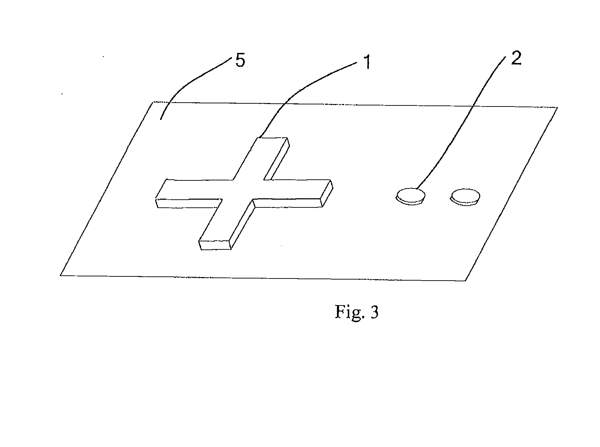

For example, in another embodiment of the present invention, the direction control keys 1 and the function buttons 2 may be in an integral configuration or a detachable configuration. As shown in Fig.3, when the game controller is in an integral configuration, the direction control keys 1 and the function buttons 2 are provided on a substrate 5, so as to facilitate the assembly operation of the game controller onto the touch screen. There may be one or more function button(s) 2, each of which has functions of selection, confirmation and so on. The direction control keys 1 and the function buttons 2 may be attached to the touch screen in a suction or adhesive way. For example, in the present embodiment, the direction control key 1 is cross shape on its whole, and the pressing touch pins 4 are arranged at each end portions of the direction control keys 1 so as to effectively conduct game manipulations in four directions, i.e., the up-and-down and left-and-right directions.

For example, in another embodiment of the present invention, the direction control keys 1 and the function buttons 2 are activated by pressing. The pressing touch pin 4 may be provided with springs. For example, in another embodiment of the present invention, the back surfaces of the direction control key 1 and the function button 2 are provided with suction cups 3 for sucking the direction control key 1 and the function button 2 onto the resistive touch screen, and the pressing touch pins 4 is respectively arranged at a central position of each of the suction cups 3. The suction cups 3 may be made from resilient materials having elastics, such as rubber, silica gel, etc. The direction control keys 1 or the function buttons 2, when being pressed, has their pressing touch pins 4 in contact with the resistive touch screen; but when the direction control keys 1 or the function buttons 2 is released, the pressing touch pins 4 thereof are separated from the resistive touch screen. With such a configuration, it's capable to accurately touch corresponding positions on the touch screen, so as to achieve precisely control of moving directions and correctly giving action commands.

With the configuration of the game controller describe above, it's possible to eliminate incorrect operation of the direction control and touch position of the touch screen through simple peripheral equipments, so that the user could achieve an even better experience when playing the game with the game controller of the present invention.

The above are just preferred embodiments of the present invention, and are by no means limiting the present invention, and all modifications, alternations and refinements should be within the protective scope of the present invention without departing from the spirit and principle of the present invention.

## Claims

1. A game controller for a resistive touch screen, **characterized in that** the game controller comprises one or more direction control key and one or more function button, the back surfaces of the direction control key and the function button are provided with pressing touch pins; and the direction control key and the function button are securely attached to the resistive touch screen when the game controller is in use.

2. The game controller according to claim 1, **characterized in that** the direction control key and the function button are arranged in a detachable configuration.

3. The game controller according to claim 1, **characterized in that** the direction control key and the function buttons are arranged in an integral configuration.

4. The game controller according to claim 1, **characterized in that** the direction control key and the function button in the integral configuration are provided on a substrate.

5. The game controller according to any one of claims 1 to 3, **characterized in that** the direction control key is cross shape, and the pressing touch pins are provided on each end portions of the direction control key.

6. The game controller according to any one of claims 1 to 3, **characterized in that** the back surfaces of the direction control key and the function button are provided with suction cups for attaching the direction control key and the function button onto the resistive touch screen, and the pressing touch pins are respectively arranged at a central position of each of the suction cups.

7. The game controller according to claim 6, **characterized in that** the suction cups are made from resilient material.

8. The game controller according to claim 1, **characterized in that** the direction control key and the function button are adhesively attached to the resistive touch screen.
